# FASCICULE DE BREVET EUROPEEN

(11) **EP 3 207 534 B1**
(45) Date de publication et mention de la délivrance du brevet: **12.05.2021**
(21) Numéro de dépôt: 15785077.7
(22) Date de dépôt: 16.10.2015
(51) Int. Cl.: G07G 1/00, G07F 7/08, E05B 73/00

(54) **TERMINAL DE PAIEMENT MOBILE COMPRENANT UNE FONCTION DE DÉVERROUILLAGE EMBARQUÉE**
MOBILES ZAHLUNGSENDGERÄT MIT EINEM EINGEBETTETEN ENTRIEGELUNGSFUNKTION
MOBILE PAYMENT TERMINAL COMPRISING AN EMBEDDED UNLOCKING FUNCTION

(30) Priorité: 17.10.2014 FR 1460027
(43) Date de publication de la demande: 23.08.2017
(73) Titulaire: Ingenico Group, 75015 Paris (FR)
(72) Inventeur: PIGNAL, Pierre, F-26000 Valence (FR)
(74) Mandataire: Vidon Brevets & Stratégie
(86) Numéro de dépôt international: PCT/EP2015/073986
(87) Numéro de publication internationale: WO 2016/059201

(56) Documents cités:
- WO-A1-2014/029768
- WO-A2-2007/010484
- US-A- 5 812 356

## Description

### 1. DOMAINE DE L'INVENTION

Le domaine de l'invention est celui des terminaux électroniques mobiles.

Plus précisément, l'invention concerne des terminaux de paiement mobiles destinés à être utilisés avec des supports numériques nomades et le verrouillage de ces terminaux sur leur support.

L'invention a de nombreuses applications, telles que par exemple l'utilisation de ces terminaux avec des tablettes numériques ou des bornes numériques/kiosk, notamment.

### 2. ARRIÈRE-PLAN TECHNOLOGIQUE

On s'attache plus particulièrement dans la suite de ce document à décrire la problématique existant dans le domaine des terminaux de paiement mobiles, à laquelle ont été confrontés les inventeurs de la présente demande de brevet. L'invention ne se limite bien sûr pas à ce domaine particulier d'application, mais présente un intérêt pour tous terminaux électroniques mobiles devant faire face à une problématique proche ou similaire.

On connaît, dans l'état de la technique, des supports numériques nomades, tels que les tablettes tactiles ou les bornes numériques interagissant avec un terminal de paiement mobile y étant rattaché. On retrouve fréquemment ce type de dispositif lors de foires expositions, par exemple.

Pour effectuer l'opération de paiement, il est préférable de retirer le terminal de paiement de son support (en l'occurrence une tablette tactile ou une borne numérique par exemple), afin de laisser le client gérer la transaction en toute confidentialité (insertion de la carte + saisie du code PIN).

Pour ce faire, il est donc nécessaire que le terminal soit amovible très facilement de manière à simplifier son utilisation.

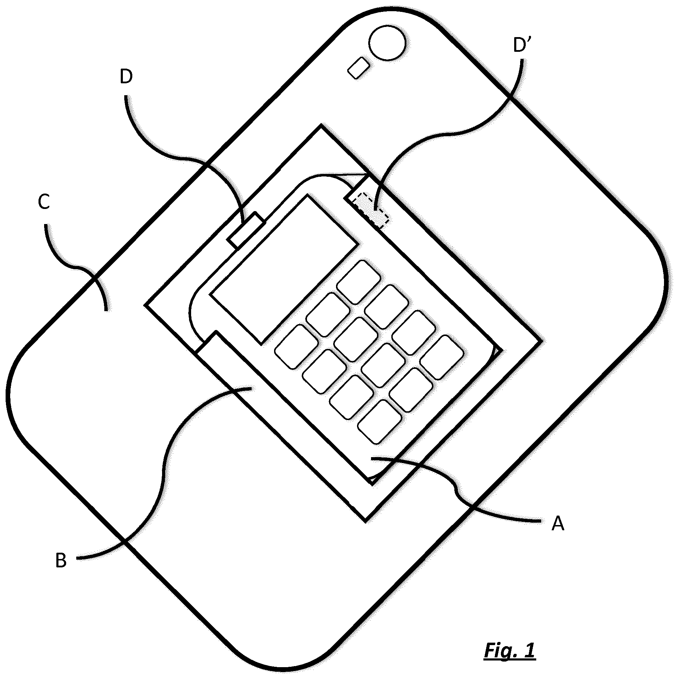

Selon une première technique, illustré sur la figure 1, le terminal A de paiement mobile est simplement inséré dans un socle/embase B situé au dos du support numérique C, une tablette tactile comme illustré ici.

Le maintien du terminal dans le socle est obtenu par le biais de clips D ou D', fixe ou mobile (par exemple un crochet sur glissière que l'on peut déplacer avec le doigt de quelques millimètres pour relâcher le terminal) ou tout autre élément similaire.

Un inconvénient de cette solution technique connue réside dans le fait que le terminal de paiement ne présente aucun système sécurisé permettant de contrôler son retrait du socle. Le terminal est ainsi facilement retirable du socle par un tiers non autorisé et donc fortement sujet au risque de vol.

Un autre inconvénient de cette solution technique connue réside dans le risque de chute du terminal. En effet, le terminal étant fixé à un support numérique mobile, les différents mouvements de ce support peuvent entrainer le détachement non souhaité du terminal, et donc sa chute.

Pour palier ces inconvénients de l'art antérieur, une deuxième technique a été développée. Celle-ci consiste à mettre en œuvre, en plus du socle connu, un système de verrouillage du terminal de paiement mobile, porté par le support numérique.

Ainsi, lorsque le terminal est inséré dans le socle, le système de verrouillage empêche tout retrait non souhaité du terminal.

Un inconvénient de cette deuxième solution technique connue réside dans le fait que le système de déverrouillage peut être activé par un individu quelconque.

Un autre inconvénient de cette solution technique connue réside dans le coût important du système de verrouillage du terminal de paiement mobile au support numérique.

D'autres solutions ont été développées afin de permettre une solidarisation contrôlée d'un dispositif mobile à un support. Ces solutions sont décrites dans les documents de brevet US 5 812 356, WO 2007/010484 et WO 2014/029768. Toutefois, ces solutions ne sont pas entièrement satisfaisantes.

En d'autres termes, il n'existe actuellement aucun système sécurisé et simple permettant d'utiliser un terminal de paiement mobile avec un support numérique nomade.

### 3. OBJECTIFS DE L'INVENTION

L'invention, dans au moins un mode de réalisation, a notamment pour objectif de pallier ces différents inconvénients de l'état de la technique.

Plus précisément, dans au moins un mode de réalisation de l'invention, un objectif est de fournir une technique sécurisée de verrouillage d'un terminal de paiement mobile à un support numérique nomade.

Autrement dit, au moins un mode de réalisation de l'invention vise à empêcher les vols, chutes et retraits intempestifs du terminal de paiement mobile.

Au moins un mode de réalisation de l'invention a également pour objectif de fournir une telle technique qui soit fiable et simple d'utilisation, tout en étant peu coûteuse.

Un autre objectif d'au moins un mode de réalisation de l'invention est de fournir une telle technique qui soit robuste et nécessitant peu de maintenance.

### 4. EXPOSÉ DE L'INVENTION

L'invention est telle que définie dans la revendication indépendante 1. Plus précisément, l'invention propose un dispositif électronique mobile comprenant des moyens de solidarisation réversibles à un support, le dispositif comprenant des moyens de commande du déverrouillage des moyens de solidarisation réversibles permettant de désolidariser le dispositif du support.

Ainsi, l'invention repose sur une approche nouvelle et inventive du verrouillage d'un dispositif électronique mobile (par exemple un terminal tel qu'un terminal de paiement électronique) sur un support (par exemple un support numérique), grâce à des moyens de commande propres au dispositif électronique mobile permettant le déverrouillage des moyens de solidarisation situés sur le dispositif électronique mobile.

Une telle mise en œuvre permet d'empêcher les vols, chutes ou décrochages intempestifs du dispositif électronique mobile car, contrairement à l'art antérieur, le déverrouillage n'est possible que sur commande du dispositif électronique mobile lui-même.

En effet, selon les techniques connues, les moyens de déverrouillage du dispositif électronique mobile au support se situe sur le support lui-même (par exemple sous la forme d'un bouton permettant d'éjecter le dispositif) et sont donc susceptibles d'être actionnés par toute personne passant à côté du système.

Selon l'invention, les moyens de commande prennent la forme d'un actionneur électromécanique interne au dispositif électronique mobile et non accessible à l'extérieur du terminal de paiement électronique.

La mise en œuvre d'un actionneur électromécanique permet d'agir mécaniquement sur les moyens de solidarisation réversibles tout en étant pilotable électroniquement.

Ainsi, la désolidarisation du dispositif électronique mobile ne peut pas être mise en œuvre par une action extérieure sur le terminal, mais uniquement en pilotant/commandant électroniquement l'actionneur électromécanique.

Encore selon l'invention, le dispositif électronique mobile comprend en outre des moyens de contrôle aptes à communiquer avec les moyens de commande portés par le dispositif électronique mobile.

Ainsi, de tels moyens de contrôle permettent de contrôler l'activation des moyens de commande.

Par exemple, les moyens de contrôle permettent l'activation des moyens de commande par la simple transmission du montant de la transaction en cours, que ce soit de manière explicite ou bien dans un flot de paramètres incluant ce montant de la transaction.

Selon l'invention, les moyens de solidarisation réversibles portés par le dispositif électronique mobile comprennent au moins une ouverture ménagée sur au moins une face du dispositif, l'ouverture étant apte à coopérer avec au moins un ergot mobile formé par les éléments de verrouillage portés par le support, de manière à verrouiller le dispositif électronique mobile au support.

Ainsi, de tels moyens permettent un verrouillage et une stabilité optimale du dispositif électronique mobile au support. En effet, la mise en œuvre d'au moins une ouverture (circulaire ou rectangulaire par exemple) destinée à coopérer avec au moins un ergot permet un centrage et un maintien précis du dispositif électronique mobile.

Plus précisément, les moyens de commande entrainent l'ergot mobile entre au moins une position déployée, dans laquelle le dispositif électronique mobile est verrouillé au support et une position rétractée dans laquelle le dispositif électronique mobile peut être retiré du support.

L'invention permet donc un retrait aisé et rapide tout en garantissant un verrouillage assuré du dispositif électronique mobile.

En particulier, les moyens de contrôle sont aptes à générer et transmettre une information de commande aux moyens de commande autorisant le déverrouillage du dispositif électronique mobile.

Selon un aspect particulier de l'invention, les moyens de solidarisation réversibles sont aptes à coopérer de manière automatique avec des éléments de verrouillage portés par le support lorsque le dispositif électronique mobile est solidarisé au support.

L'avantage d'une solidarisation automatique du dispositif électronique mobile au support est qu'il n'est pas nécessaire d'utiliser une nouvelle fois les moyens de commande pour que le dispositif électronique mobile puisse être solidarisé au support. Un tel mode de réalisation permet de simplifier l'utilisation générale du dispositif électronique mobile et donc de générer un gain de temps et d'ergonomie pour l'utilisateur.

Selon un exemple ne relevant pas de l'invention, les moyens de solidarisation réversibles portés par le dispositif électronique mobile et les éléments de verrouillage portés par le support sont configurés pour former un système de verrouillage magnétique du dispositif électronique mobile au support.

Selon cet exemple ne relevant pas de l'invention, un tel système de verrouillage permet au dispositif électronique mobile d'être utilisé sans élément mécanique particulier supplémentaire, tel qu'un socle, sur le support. En d'autres termes, le système permet une adaptabilité du dispositif électronique mobile à tout type de support, sans nécessiter la mise en œuvre d'un socle présentant une pluralité d'éléments de verrouillage du dispositif électronique mobile. Son implémentation est donc très aisée.

Par exemple, les moyens de solidarisation réversibles portés par le dispositif électronique mobile et les éléments de verrouillage portés par le support sont respectivement un aimant et une bobine.

Ainsi, selon cet exemple ne relevant pas de l'invention, la mise en œuvre d'un aimant et d'une bobine afin de solidariser et verrouiller le dispositif électronique mobile au support permet une implémentation simple et peu couteuse d'un système magnétique. En effet, cette mise en œuvre ne nécessite que peu de modifications du dispositif électronique mobile et du support par rapport à l'art antérieur.

Selon un autre exemple ne relevant pas de l'invention, les moyens de solidarisation réversibles portés par le dispositif électronique mobile comprennent un logement et une lame mobile aptes à coopérer avec un pêne statique formé par les éléments de verrouillage portés par le support, de manière à verrouiller le dispositif électronique mobile au support.

Ces moyens sont simples à mettre en œuvre, fiables et robustes. La maintenance de tels moyens est donc peu onéreuse.

Selon un aspect particulier de l'invention, les moyens de commande sont configurés pour permettre le retrait du dispositif électronique mobile du support lorsqu'au moins un critère prédéterminé de défaut du dispositif électronique mobile est détecté.

Cet aspect permet de retirer le dispositif électronique mobile du support lorsque ce dernier se retrouve en défaut, par exemple lorsqu'il n'est plus alimenté ou lorsque la communication avec le support numérique ne fonctionne plus. Dans le cas d'un défaut, les moyens de commande sont automatiquement placés dans une configuration de déverrouillage des moyens de solidarisation réversibles permettant ainsi le retrait du dispositif électronique mobile.

L'invention concerne également un système électronique mobile comprenant un support et un dispositif électronique mobile tels que décrits en relation avec la revendication 1.

L'invention concerne également un procédé de déverrouillage d'un dispositif électronique mobile tel que décrit en relation avec la revendication 1 comprenant une étape de commande du déverrouillage des moyens de solidarisation réversibles du dispositif électronique mobile permettant de désolidariser le dispositif électronique mobile d'un support.

### 5. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 illustre un système de maintien d'un terminal de paiement mobile à un support numérique, comme déjà décrit en relation avec l'art antérieur ;
- les figures 2a et 2b présentent en perspective, un premier mode de réalisation de l'invention ;
- les figures 3a et 3b présentent un diagramme d'événements (ou diagramme de séquence) montrant de manière générique la cinématique du traitement d'un achat respectivement selon le premier mode de réalisation et selon une variante du premier mode de réalisation ;
- la figure 4 illustre, en perspective, un deuxième mode de réalisation ne relevant pas de l'invention et présent uniquement à titre illustratif ; et
- les figures 5a et 5b illustrent, en perspective, un troisième mode de réalisation ne relevant pas de l'invention et présent uniquement à titre illustratif.

### 6. DESCRIPTION DÉTAILLÉE

Le principe de l'invention repose sur le déverrouillage contrôlé d'un dispositif électronique mobile (par exemple un terminal de paiement mobile) à un support (par exemple un support numérique tel qu'une tablette ou un smartphone, ou encore une borne numérique), le contrôle du déverrouillage étant mis en œuvre sur le dispositif électronique mobile.

Plus précisément, l'invention permet de contrôler le retrait d'un terminal de paiement mobile d'un support numérique.

### 6.1 Description d'un premier mode de réalisation de l'invention

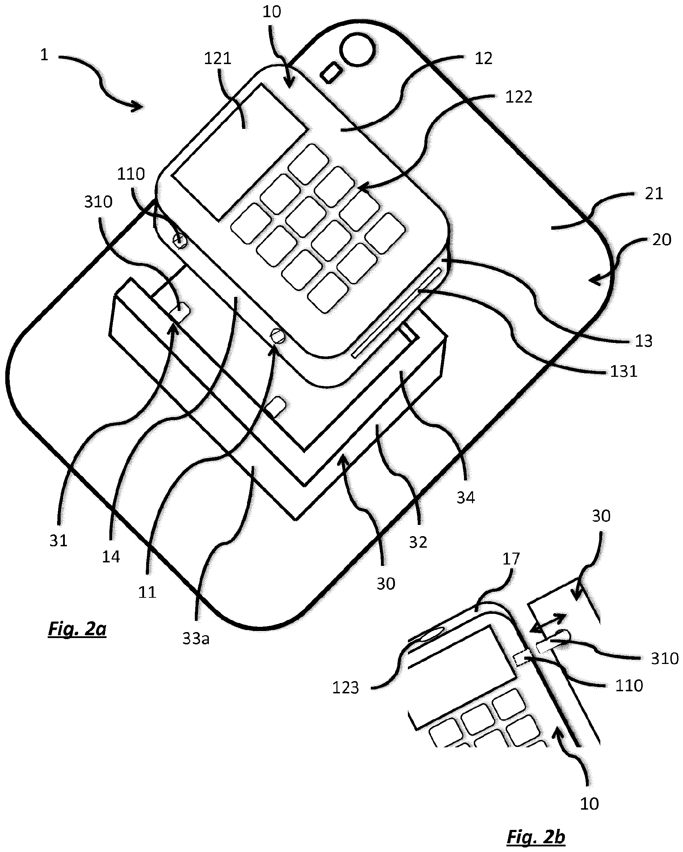

On présente maintenant, en relation avec les figures 2a et 2b, un système électronique mobile, (un système de paiement, par exemple) mettant en œuvre une technique selon un mode de réalisation particulier de l'invention.

Ainsi, le système de paiement 1 met en œuvre un support numérique 20, ou tablette tactile, et un dispositif électronique mobile, ou terminal de paiement mobile 10.

Le support 20 présente, sur sa face arrière 21, un socle ou logement 30 apte à accueillir le terminal de paiement 10.

Le socle 30 comprend une paroi longitudinale 32 sensiblement rectiligne présentant, à chacune de ses extrémités, deux parois latérales 33a et 33b (non représentée) de même longueur et s'étendant sensiblement perpendiculairement à la paroi 32.

Le socle 30 présente donc une forme en « U » et comprend, en outre, un rebord 34 sur l'ensemble des parois 32, 33a et 33b qui s'étend perpendiculairement.

L'agencement des parois 32, 33a, 33b et du rebord 34 forme ainsi un logement apte à accueillir, tout en le retenant, le terminal de paiement mobile 10.

Par ailleurs, le socle 30 comprend des éléments de verrouillage 31 situés sur chacune des parois latérales 33a et 33b. Les éléments de verrouillage 31 se présentent sous la forme d'ergots 310.

Plus précisément, chaque paroi latérale 33a et 33b comprend deux ergots 310. Ces ergots s'étendent perpendiculairement aux parois latérales et sont orientés vers l'intérieur du socle 30. Ainsi, les ergots 310 de la paroi 33a et ceux de la paroi 33b sont en vis-à-vis.

En outre, les ergots 310 sont mobiles en translation entre deux positions :
- une position rétractée (non représentée) dans laquelle ils sont rentrés dans les parois 33a et 33b. Cette position permet l'insertion et le retrait du terminal 10 dans le socle 30; et
- une position déployée, comme illustré aux figures 2a et 2b, dans laquelle ils sont sortis des parois 33a et 33b. Cette position permet un verrouillage du terminal 10 dans le socle 30.

Dans une variante, la mise en œuvre d'un seul ergot 310 sur une des parois latérales 33a, 33b pourrait être envisagée, tout en garantissant l'efficacité du verrouillage du terminal 10 au support 20.

Le terminal de paiement mobile 10, de forme sensiblement parallélépipédique, comprend sur sa face avant 12 un écran d'affichage 121 et un clavier 122 comprenant une pluralité de touches.

On comprend bien évidemment ici que le terminal 10 peut se présenter sous toute autre forme qu'un parallélépipède.

Le terminal de paiement mobile 10 comprend également une lumière 131 rectiligne ménagée sur la surface inférieure 13 et destinée à réceptionner une carte à puce (non représentée), par exemple une carte de paiement.

En outre, le terminal de paiement mobile 10 comprend des moyens de solidarisation réversibles 11. Ces moyens de solidarisation réversibles forment par exemple des trous 110 circulaires ménagés dans les surfaces latérales 14 et 15 du terminal de paiement mobile 10.

Ces trous 110 sont configurés de manière à coopérer avec les ergots 310 du socle 30 lorsque ces derniers sont en position déployée. Ainsi, les éléments de verrouillage 31 et les moyens de solidarisation réversibles 11 permettent une solidarisation réversible du terminal de paiement 10 au support numérique 20.

Le terminal de paiement mobile 10 comprend également des moyens de commande 170 du déverrouillage du terminal 10 du support 20. Ces moyens de commande 170 (non illustrés) se présentent sous la forme d'un actionneur électromécanique destiné à agir sur les moyens de solidarisation réversibles.

Selon l'invention, l'actionneur électromécanique (non représenté) est interne au terminal de paiement mobile 10 et permet d'entrainer les ergots mobiles 310 de la position déployée à la position rétractée, et inversement. Cet actionneur électromécanique n'est pas accessible à l'extérieur du terminal de paiement électronique et ne peut être piloté qu'électroniquement, via les moyens de contrôle décrits ci-après.

Par ailleurs, le système 1 comprend des moyens de contrôle (non représentés) configurés, selon ce mode de réalisation, pour transmettre une information de commande aux moyens de commande du déverrouillage. Cette information de commande comprend un ordre de déverrouillage destiné à activer l'actionneur électromécanique permettant ainsi le déverrouillage du terminal 10 du socle 30.

Cette information de commande peut être contenue dans un flot de paramètres/informations transitant par une liaison filaire (USB, Série, Ethernet, Modem, ...) ou sans fils, de type BT ou Wifi par exemple.

En cas de défaut du terminal, les moyens de commande sont automatiquement placés dans une configuration permettant le retrait du terminal 10 du support 20. Le défaut peut être de type défaut d'alimentation du terminal 10, absence de communication entre le terminal 10 et le support 20, défaut d'une des fonctions du terminal 10, ou bien encore demande explicite d'un agent de maintenance.

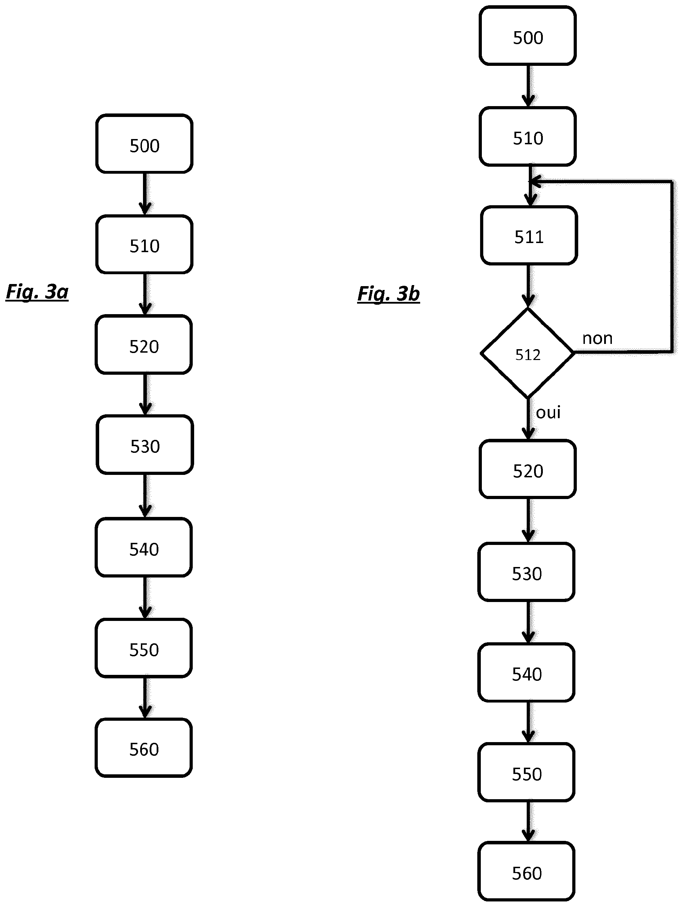

On décrit maintenant plus en détails le fonctionnement de ces moyens de contrôle et de commande, en relation avec la figure 3a, dans le cadre d'un achat, par un consommateur, chez un commerçant ou un prestataire de service équipé d'un tel système de paiement 1. Après avoir sélectionné les produits ou services désirés à l'aide du support numérique 20, le consommateur valide son panier/sa commande (étape 500).

La validation du panier déclenche alors la phase de paiement de la commande du consommateur. Pour ce faire, il est nécessaire que le consommateur insère sa carte de paiement dans le terminal 10 et qu'il saisisse son code confidentiel (code PIN).

Afin de faciliter l'insertion de la carte et la saisie du code, le terminal 10 doit être retiré du support numérique 20. Ainsi, lors de la validation du panier par le consommateur ou le commerçant, le terminal 10 reçoit le montant de la transaction (étape 510) via les moyens de communication existant entre le support 20 et le terminal 10.

Sur réception du montant de la transaction, les moyens de contrôle envoient une information de commande comprenant un ordre de déverrouillage aux moyens de commande (étape 520).

La réception de l'ordre de déverrouillage entraine l'activation des moyens de commande permettant le déverrouillage des moyens de solidarisation réversibles (étape 530). Lors de cette étape, l'actionneur électromécanique repousse les ergots mobiles 310 dans les parois latérales 33a et 33b du socle 30 de façon à être en position rétractée.

Cette position libère alors le terminal 10 qui peut être retiré (étape 540) du socle (par le commerçant par exemple).

Une fois le terminal 10 retiré du socle 30, le consommateur peut aisément procéder au paiement en insérant sa carte de paiement dans la lumière 131 du terminal 10 et en saisissant son code PIN à l'aide du clavier 122 (étape 550).

Le commerçant procède ensuite à la réinsertion du terminal 10 dans le socle 30 du support 20 (étape 560).

Dans une variante, en relation avec la figure 3b, suite à la transmission du montant de la transaction (étape 510), les moyens de commande requièrent, par l'intermédiaire du terminal 10, la saisie d'un code de déverrouillage (étape 511) par le commerçant de façon à autoriser le retrait du terminal 10.

Dans le cas où le code saisi par le commerçant est erroné (test 512), aucun ordre de déverrouillage n'est envoyé depuis les moyens de contrôle vers les moyens de commande et provoque donc un refus du déverrouillage du terminal 10.

Sans cet ordre de déverrouillage, les moyens de commande du déverrouillage sont inhibés/inactifs et ne permettent donc pas la désolidarisation du terminal 10.

Les moyens de contrôle requièrent donc une nouvelle fois la saisie du code (étape 511) par le commerçant jusqu'à la saisie d'un code valide permettant le déverrouillage du terminal 10.

Si le code saisi par le commerçant est valide (test 512), les moyens de contrôle transmettent l'ordre de déverrouillage (étape 520) aux moyens de commande du déverrouillage.

Les étapes suivantes sont ensuite identiques aux étapes décrites précédemment.

Dans une variante de réalisation ne relevant pas de l'invention, la face supérieure 17 du terminal de paiement mobile 10 comprend un élément manuel de commande 171 du déverrouillage du terminal 10 du support 20. Cet élément manuel de commande 171 se présente par exemple sous la forme d'un bouton poussoir qui, lorsqu'il est pressé/activé, déclenche le passage des ergots 310 de la position déployée à la position rétractée, permettant ainsi le retrait du terminal 10 du socle 30.

Cet élément manuel de commande 171 est désinhibé par les moyens de contrôle lorsqu'il reçoit l'ordre de déverrouillage et peut donc être pressé/activé pour permettre le déverrouillage du terminal 10. Ce sont donc toujours les moyens de contrôle internes au terminal de paiement électronique qui permettent de piloter le déverrouillage du terminal de paiement électronique.

Dans une autre variante de réalisation ne relevant pas de l'invention, les moyens de contrôle sont situés sur le support et communiquent avec les moyens de commande 171 via les moyens de communication existants entre le support et le terminal 10. Ainsi, selon cette variante, le commerçant inhibe les moyens de commande par une action sur le support numérique, et non sur le terminal, avant de confier le système (support numérique + terminal) au consommateur, qui saisira son code pin directement sur le terminal relié à la tablette. Selon cette variante, les moyens de commande de déverrouillage sont pilotés certes par des moyens de contrôle externes au terminal de paiement électronique, mais via des moyens de communication existants entre le terminal de paiement électronique et le support et non par une action extérieure sur le terminal de paiement électronique. En d'autres termes, les moyens de contrôle

communiquent avec les moyens de commande de manière sécurisée sous la responsabilité du commerçant.

Il est à noter que les moyens de contrôle et de commande peuvent être mis en œuvre de différentes manières, selon d'autres modes de réalisation de l'invention, de façon à contrôler le retrait du terminal de son support, de manière sécurisée et ergonomique.

Dans une autre variante de ce premier mode de réalisation mais ne relevant pas de l'invention, les moyens formant respectivement les moyens de solidarisation réversibles 11 portés par le terminal 10 et les éléments de verrouillage 11 situés sur le socle 30 sont inversés. En d'autres termes, les ergots mobiles 310 sont situés sur les surfaces latérales 14 et 15 du terminal 10 et les trous 110 correspondants sont ménagés dans les parois latérales 33a et 33b du socle 30 en lieu et place des ergots 310.

### 6.2 Description d'un deuxième mode de réalisation ne relevant pas de l'invention

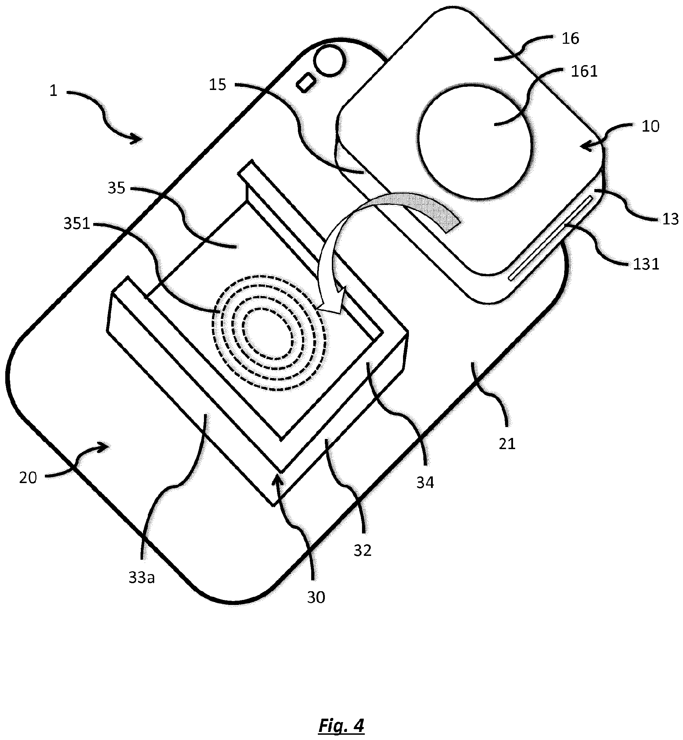

Dans un deuxième mode de réalisation ne relevant pas de l'invention, illustré à la figure 4, les moyens de solidarisation réversibles du terminal de paiement mobile 10 au support 20 numérique prennent la forme d'une partie d'un système électromagnétique, coopérant avec une autre partie située sur le socle du support numérique 20.

Plus précisément, le socle 30 présente, sur sa surface de fond 35, des éléments de verrouillage (par exemple une bobine) 351 aptes à produire un champ électromagnétique (non représenté).

Cette bobine 351, associée à un aimant 161 (formé par les moyens de solidarisation réversibles 11) disposé sur la face arrière 16 du terminal 10, permet ainsi de verrouiller magnétiquement le terminal 10 au support 20.

Dans une variante de ce mode de réalisation ne relevant pas de l'invention, la bobine 351 est portée par le terminal 10 et l'aimant 161 par le socle 30 du support 20.

On comprend bien évidemment ici, que la bobine 351 et l'aimant 161 peuvent être substitués par des éléments électromagnétiques équivalents permettant d'atteindre le même effet.

La mise en œuvre des moyens de commande et de contrôle décrits ci-dessus, en relation avec le premier mode de réalisation, est applicable à ce deuxième mode de réalisation ne relevant pas de l'invention, et n'est pas détaillée à nouveau.

### 6.3 Description d'un troisième mode de réalisation ne relevant pas de l'invention

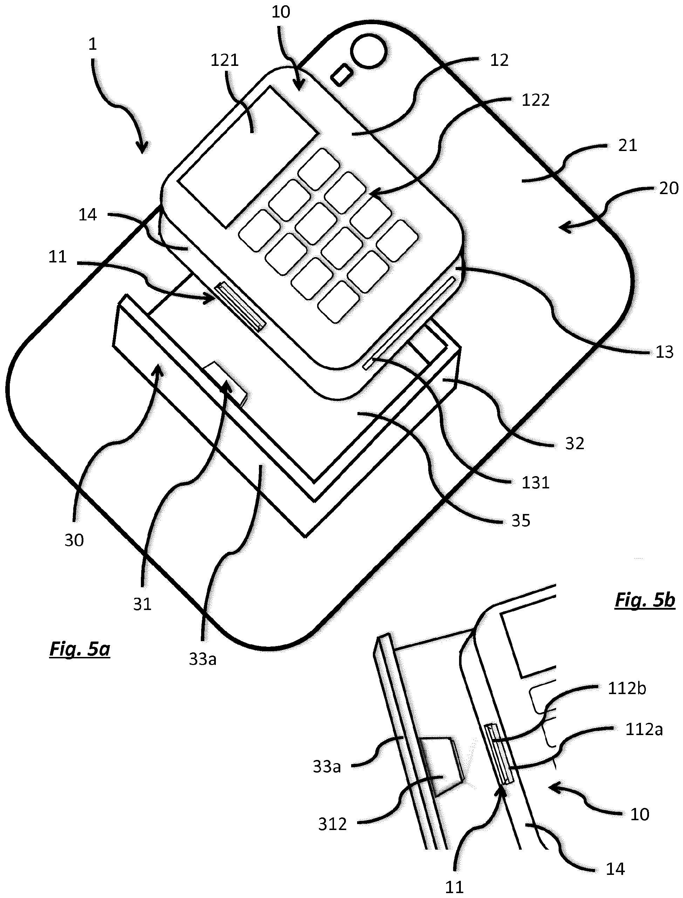

Dans ce troisième mode de réalisation ne relevant pas de l'invention, illustré en figures 5a et 5b, les moyens de solidarisation réversibles du terminal de paiement mobile 10, ainsi que les éléments de verrouillage du support 20, ont été modifiés.

Plus précisément, les éléments de verrouillage 31 (situés sur le socle 30) se présentent sous la forme d'un pêne 312 statique/fixe, situé sur la paroi 33a du socle 30 et s'étendant perpendiculairement à cette paroi vers l'intérieur du socle 30.

En outre, les moyens de solidarisation réversibles 11 se présentent sous la forme d'une gâche située sur la surface latérale 14 du terminal 10 et présentant une lame mobile 112a et un logement 112b.

Le logement 112b, de forme correspondante au pêne 312, est ménagé dans la surface 14 du terminal de paiement mobile 10 et est configuré pour recevoir le pêne 312 lors du verrouillage.

L'accès du pêne 312 dans le logement 112b est obtenu par un mouvement de rotation de la lame mobile 112a. Une fois le pêne 312 inséré dans le logement 112b, la lame mobile 112a reprend sa position initiale et bloque ainsi le pêne 312 dans le logement 112b.

Dans une variante de ce mode de réalisation ne relevant pas de l'invention, les moyens de solidarisation respectifs sur le terminal de paiement électronique et le support peuvent être inversés. Ainsi, la gâche pourrait être située sur la paroi 33a du socle 30 alors que le pêne 312 pourrait être situé sur la surface latérale 14 du terminal 10.

Là encore, la mise en œuvre des moyens de commande et de contrôle décrits ci-dessus, en relation avec le premier mode de réalisation, est applicable à ce troisième mode de réalisation ne relevant pas de l'invention, et n'est pas détaillée à nouveau.

## Revendications

1. Terminal de paiement électronique mobile (10) comprenant des moyens de solidarisation réversibles (11) à un support (20), **caractérisé en ce que** ledit terminal de paiement électronique (10) comprend des moyens de commande du déverrouillage des moyens de solidarisation réversibles (11), lesdits moyens de commande déplaçant lesdits moyens de solidarisation réversibles entre leurs positions de verrouillage et de déverrouillage de façon à désolidariser ledit terminal de paiement électronique mobile (10) dudit support (20), lesdits moyens de commande prenant la forme d'un actionneur électromécanique manuel interne audit terminal de paiement électronique mobile (10) ;
**en ce qu'**il comprend en outre des moyens de contrôle aptes à communiquer de manière sécurisée avec lesdits moyens de commande portés par ledit terminal de paiement électronique mobile (10) ;
**et en ce que** lesdits moyens de solidarisation réversibles (11) portés par le terminal de paiement électronique mobile (10) comprennent au moins une ouverture (110) ménagée sur au moins une face (14) dudit terminal de paiement électronique mobile (10), ladite au moins une ouverture (110) étant apte à coopérer avec au moins un ergot (310) mobile formé par lesdits éléments de verrouillage (31) portés par ledit support (20), de manière à verrouiller ledit terminal de paiement électronique mobile (10) audit support (20),
lesdits moyens de commande entrainant en translation ledit au moins un ergot (310) mobile entre au moins une position déployée, dans laquelle ledit terminal de paiement électronique mobile (10) est verrouillé audit support (20), et une position rétractée dans laquelle ledit terminal de paiement électronique mobile (10) peut être retiré dudit support (20).

2. Terminal de paiement électronique mobile (10) selon la revendication 1, **caractérisé en ce que** lesdits moyens de contrôle sont aptes à générer et transmettre une information de commande auxdits moyens de commande autorisant le déverrouillage dudit terminal de paiement électronique mobile (10).

3. Terminal de paiement électronique mobile (10) selon l'une des revendications 1 et 2, **caractérisé en ce que** lesdits moyens de solidarisation réversibles (11) sont aptes à coopérer de manière automatique avec des éléments de verrouillage (31) portés par ledit support (20) lorsque ledit terminal de paiement électronique mobile (10) est solidarisé audit support (20).

4. Terminal de paiement électronique mobile (10) selon la revendication 1, **caractérisé en ce que** lesdits moyens de commande sont configurés pour permettre le retrait dudit terminal de paiement électronique (10) dudit support (20) lorsqu'au moins un critère prédéterminé de défaut du terminal de paiement électronique mobile (10) est détecté.

5. Système électronique mobile (1) **caractérisé en ce qu'**il comprend un support (20) et un terminal de paiement électronique mobile (10) selon l'une des revendications 1 à 4.

6. Procédé de déverrouillage d'un terminal de paiement électronique mobile (10) selon l'une des revendications 1 à 4 **caractérisé en ce qu'**il comprend une étape de commande, mise en œuvre dans ledit terminal de paiement électronique, du déverrouillage des moyens de solidarisation réversibles dudit terminal de paiement électronique (10), permettant de désolidariser ledit terminal de paiement électronique (10) d'un support (20).

## Patentansprüche

1. Mobiles elektronisches Zahlungsendgerät (10), umfassend reversible Befestigungsmittel (11) an einem Träger (20), **dadurch gekennzeichnet, dass** das elektronische Zahlungsendgerät (10) Mittel zum Steuern des Entriegelns der reversiblen Befestigungsmittel (11) aufweist, wobei die Mittel zum Steuern die reversiblen Befestigungsmittel zwischen ihrer Verriegelungsposition und ihrer Entriegelungsposition derart bewegen, um das mobile elektronische Zahlungsendgerät (10) von dem Träger (20) zu trennen, wobei die Mittel zum Steuern die Form eines manuellen elektromechanischen Stellglieds annehmen, das sich im Inneren des mobilen elektronischen Zahlungsendgerät (10) befindet,
dadurch, dass es ferner Kontrollmittel aufweist, die geeignet sind, auf gesicherte Weise mit den Mitteln zum Steuern zu kommunizieren, die von dem mobilen elektronischen Zahlungsendgerät (10) getragen sind, und dadurch, dass die reversiblen Befestigungsmittel (11), die von dem mobilen elektronischen Zahlungsendgerät (10) getragen sind, mindestens eine Öffnung (110) aufweisen, die auf einer Seite (14) des mobilen elektronischen Zahlungsendgeräts (10) ausgebildet ist, wobei die mindestens eine Öffnung (110) geeignet ist, mit mindestens einem beweglichen Sporn (310), der in den Verriegelungselementen (31) gebildet ist, die von dem Träger (20) getragen sind, derart zusammenzuwirken, um das mobile elektronische Zahlungsendgerät (10) an dem Träger (20) zu verriegeln,
wobei die Mittel zum Steuern den mindestens einen beweglichen Sporn (310) zwischen mindestens einer ausgefahrenen Position, in der das mobile elektronische Zahlungsendgerät (10) an dem Träger (20) verriegelt ist, und einer eingezogenen Position, in der das mobile elektronische Zahlungsendgerät (10) von dem Träger (20) entfernt werden kann, translatorisch antreiben.

2. Mobiles elektronisches Zahlungsendgerät (10) nach Anspruch 1, dadurch, dass die Kontrollmittel geeignet sind, eine Steuerinformation zu generieren und an die Mittel zum Steuern zu übertragen, die das Entriegeln des mobilen elektronischen Zahlungsendgeräts (10) genehmigen.

3. Mobiles elektronisches Zahlungsendgerät (10) nach einem der Ansprüche 1 und 2, **dadurch gekennzeichnet, dass** die reversiblen Befestigungsmittel (11) geeignet sind, automatisch mit Verriegelungselementen (31) zusammenzuwirken, die von dem Träger (20) getragen sind, wenn das mobile elektronische Zahlungsendgerät (10) mit dem Träger (20) fest verbunden ist.

4. Mobiles elektronisches Zahlungsendgerät (10) nach Anspruch 1, dadurch, dass die Mittel zum Steuern konfiguriert sind, um das Entfernen des mobilen elektronischen Zahlungsendgeräts (10) von dem Träger (20) zu ermöglichen, wenn mindestens ein vorbestimmtes Fehlerkriterium des mobilen elektronischen Zahlungsendgeräts (10) erfasst wird.

5. Mobiles elektronisches System (1), **dadurch gekennzeichnet ist, dass** es einen Träger (20) und ein mobiles elektronisches Zahlungsendgerät (10) nach einem der Ansprüche 1 bis 4 aufweist.

6. Verfahren zum Entriegeln eines mobilen elektronischen Zahlungsendgeräts (10) nach einem der Ansprüche 1 bis 4, **dadurch gekennzeichnet, dass** es einen Schritt des Steuerns des Entriegelns der reversiblen Befestigungsmittel des elektronischen Zahlungsendgeräts (10) aufweist, der in dem mobilen elektronischen Zahlungsendgerät umgesetzt wird, der ermöglicht, das elektronische Zahlungsendgerät (10) von einem Träger (20) zu entfernen.

## Claims

1. Mobile electronic payment terminal (10) comprising means (11) of reversible fixed attachment to a support (20), **characterized in that** said electronic payment terminal (10) comprises means to command the unlocking of the reversible fixed attachment means (11), said command means shifting said reversible fixed attachment means between their locking and unlocking positions so as to detach said mobile electronic payment terminal (10) from said support (20), said command means taking the form of a hand-operated electromechanical actuator internal to said mobile electronic payment terminal (10);
and **in that** it furthermore comprises control means capable of securely communicating with said command means borne by said mobile electronic device (10);
and **in that** said reversible fixed attachment means (11) borne by the mobile electronic payment terminal (10) comprise at least one aperture (110) made on at least one face (14) of said mobile electronic payment terminal (10), said at least one aperture (110) being capable of cooperating with at least one movable lug (310) formed by said locking elements (31) borne by said support, so as to lock said mobile electronic payment terminal (10) to said support (20),
said command means drive in translation said at least one movable lug (310) between at least one deployed position in which said mobile electronic payment terminal (10) is locked to said support (20), and one retracted position in which said mobile electronic payment terminal (10) can be withdrawn from said support (20).

2. Mobile electronic payment terminal (10) according to claim 1, **characterized in that** said control means are capable of generating and transmitting a piece of command information to said command means authorizing the unlocking of said mobile electronic payment terminal (10).

3. Mobile electronic payment terminal (10) according to one of the claims 1 and 2, **characterized in that** said reversible attachment means (11) are capable of cooperating automatically with locking elements (31) borne by said support (20) when said mobile electronic payment terminal (10) is fixedly attached to said support (20).

4. Mobile electronic payment terminal (10) according to claim 1, **characterized in that** said command means are configured to enable the withdrawal of said electronic payment terminal (10) from said support (20) when at least one pre-determined criterion relating to a defect in the mobile electronic payment terminal (10) is detected.

5. Mobile electronic system (1) **characterized in that** it comprises a support (20) and a mobile electronic payment terminal (10) according to one of the claims 1 to 4.

6. Method for unlocking a mobile electronic payment terminal (10) according to one of the claims 1 and 4, **characterized in that** it comprises a step, implemented in said mobile electronic payment terminal, for commanding the unlocking of the means for the reversible fixed attachment of said mobile electronic payment terminal (10), enabling said mobile electronic payment terminal (10) to be detached from a support (20).
